# EUROPEAN PATENT SPECIFICATION

(11) **EP 2 358 569 B1**
(45) Date of publication and mention of the grant of the patent: **04.09.2013**
(21) Application number: 09832998.0
(22) Date of filing: 17.09.2009
(51) Int. Cl.: B60R 21/34

(54) **A SAFETY ARRANGEMENT**
SICHERHEITSANORDNUNG
AGENCEMENT DE SÉCURITÉ

(30) Priority: 16.12.2008 EP 08171845
(43) Date of publication of application: 24.08.2011
(73) Proprietor: Autoliv Development AB, 447 83 Vårgårda (SE)
(72) Inventor: FREDRIKSSON, Rikard, S-52131 Falkoping (SE); HALAND, Yngve, S-23940 Falsterbo (SE)
(74) Representative: Beattie, Alex Thomas Stewart
(86) International application number: PCT/GB2009/051207
(87) International publication number: WO 2010/070303

(56) References cited:
- EP-A- 1 842 747
- DE-A1- 10 204 594
- DE-A1-102007 024 783
- DE-U1-202004 014 928

## Description

THE PRESENT INVENTION relates to a safety arrangement, and more particularly relates a safety arrangement to be installed in a vehicle to seek to absorb impact energy and minimise injury to a person hit by the vehicle.

When a vehicle crashes into a pedestrian, the pedestrian is usually thrown onto the hood or bonnet of the vehicle. In most cases, the hood deforms as the pedestrian lands on the hood until the hood comes into contact with the engine block of the vehicle. The engine block and other rigid parts of the vehicle beneath the hood prevent the hood from deforming further, causing the pedestrian to be decelerated rapidly. This rapid deceleration of the pedestrian can cause injury to the pedestrian.

In order to try to minimise injury to a pedestrian hit by a vehicle, it has been proposed previously to raise a part of the hood before the pedestrian lands on the hood. The part of the hood which is raised is positioned apart from the engine block so that that part of the hood can deform over a longer distance than normal before the hood contacts the engine block. As the hood deforms, the hood absorbs energy from the pedestrian, slowing the pedestrian down gradually and thus minimising injury to the pedestrian.

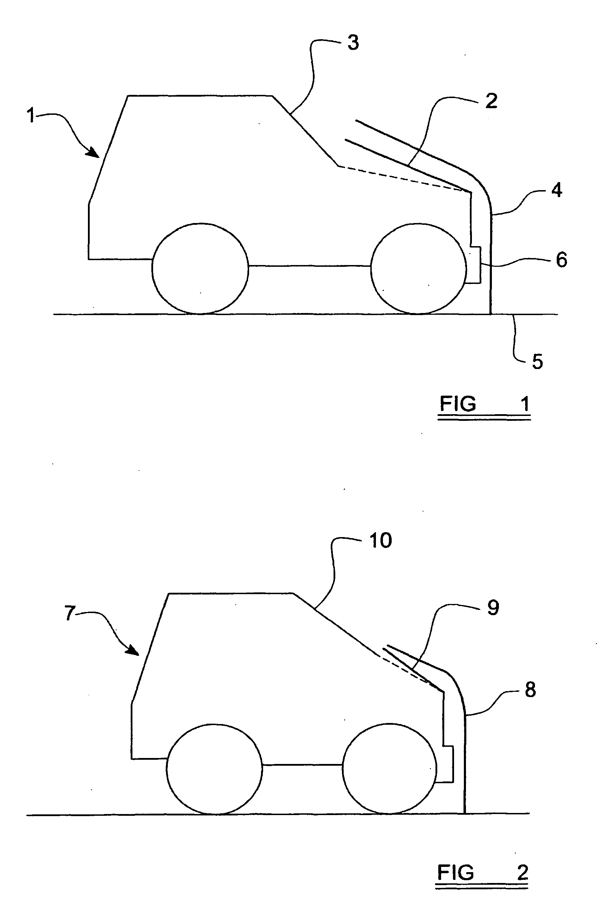

Figure 1 of the accompanying drawings shows a conventional hood lifting arrangement in a medium size vehicle 1. The vehicle 1 has a standard length hood 2. The hood lifting arrangement is shown in an activated condition, with the rear of the hood 2 of the vehicle 1 having been lifted to a raised position. The raised rear part of the hood 2 is configured to deform as a pedestrian lands on the hood 2, to minimise injury to the pedestrian as discussed above. The rear part of the hood 2 acts as a shield which is intended to shield a pedestrian from part of the windscreen 3 and from the rigid parts of the vehicle 1, such as the cowl, which are present adjacent the front edge of the windscreen 3.

A "hood wrap around" distance is indicated by the solid line 4 in figure 1. The hood wrap around distance 4 defines the distance from the ground 5 beneath the front of the vehicle 1, around the bumper 6 of the vehicle 1 to the rear edge of the hood 2 (the edge of the hood 2 which is positioned closest to the windscreen 3). The hood wrap around distance 4 of a medium size vehicle which has a standard length hood is approximately 1.5 to 2 metres.

The hood wrap around distance 4 represents how a pedestrian would most likely be thrown onto the hood 2 as the vehicle 1 collides with the pedestrian.

The conventional safety arrangement described above can work effectively when installed in a medium size vehicle which has a standard length hood, such as the vehicle 1 shown in figure 1. The conventional safety arrangement is, however, less effective when used in a vehicle which has a shorter than average hood, such as a small car or a light truck. The hood wrap around distance of a vehicle that has a shorter than average hood is approximately 1 to 1.5 metres. Figure 2 shows a smaller than average vehicle 7 which has a shorter than average hood. The hood wrap around distance of the smaller vehicle 7 is indicated by the solid line 8 in figure 2. When comparing figures 1 and 2, it is clear that the hood wrap around distance 8 of the smaller vehicle 7 is less than the hood wrap around distance 4 of the medium size vehicle 1. An average height adult is most likely taller than the short hood wrap around distance 8 of the smaller vehicle 7.

The conventional safety arrangement of the type discussed above is less effective when used in a vehicle which has a short hood because the conventional safety arrangement is not able to increase the hood wrap around distance to minimise injury to an average size pedestrian who is hit by the vehicle.

EP-A-1842747 describes a vehicle body front structure incorporating a moveable shock-absorbing surface.

The present invention seeks to provide an improved safety arrangement.

According to one aspect of the present invention, there is provided a safety arrangement configured to be mounted in a vehicle having a hood with a front edge and a rear edge, the rear edge being positioned near a windscreen, the safety arrangement comprising at least one first movement member and at least one second movement member, the at least one first movement member being configured to be mounted to the hood adjacent or near the front edge of the hood and the at least one second movement member being configured to be mounted to the hood at a position between the front and rear edges of the hood, and a drive means configured to be mounted to the vehicle to drive the hood of the vehicle from an initial position to an activated position in response to an activation signal, wherein, when the safety arrangement is mounted in position in a vehicle, the movement members control the movement of the hood when the hood is driven by the drive means so that the angle of the hood relative to the horizontal plane of the vehicle is greater than the angle of the windscreen relative to the horizontal plane of the vehicle when the hood is in the activated position, wherein the movement members control the movement of the hood when the hood is driven by the drive means so that the entire hood moves upwards relative to the vehicle and rearwardly from the front of the vehicle.

Preferably, the movement members control the movement of the hood when the hood is driven by the drive means so that the entire hood is moved rearwards in relation to the driving direction of the vehicle in which the safety arrangement is mounted.

Conveniently, the angle of the hood and the angle of the windscreen relative to the horizontal plane of the vehicle are substantially the same when the hood is in the initial position.

In one embodiment, the at least one second movement member is mounted to the hood at a position which is substantially halfway between the front and rear edges of the hood.

In another embodiment, the hood incorporates a cover element which is moveably mounted to the hood adjacent the rear edge of the hood, the cover element being superimposed on the underside of the hood when the hood is in the initial position, but configured to move to a position in which the cover element extends outwardly from the rear edge of the hood when the hood moves from initial position to the activated position.

In a further embodiment, the hood incorporates a shield element which is moveably mounted to the hood adjacent the front edge of the hood, the shield element being superimposed on the underside of the hood when the hood is in the initial position, but configured to move to a position where the shield element extends outwardly from the front edge of the hood when the hood moves from the initial position to the activated position.

Preferably, the shield element is a flexible element.

In one embodiment, the at least one first movement member is the shield element.

Conveniently, the shield element is connected to the at least one first movement member.

Advantageously, the hood incorporates a guide member which contacts the shield element to guide the shield element when the shield element moves relative to the hood.

Preferably, the shield element is configured to pivotally engage with a part of the vehicle in which the hood is mounted.

Conveniently, the drive means is connected to at least one of the first and second movement members to drive the said at least one movement member.

Advantageously, the driving means is a hood lifter.

Preferably, the first and second movement members are defined by rigid elongate elements which have one end configured to be pivotally mounted to a hood and another end configured to be pivotally mounted to a part of a vehicle.

In one embodiment, one of the at least one first movement members and one of the at least one second movement members is a plastically deformable elongate element and the other of the at least one first movement members and the at least one second movement members is a flexible element.

In another embodiment, at least one of the movement members comprises a piston.

Preferably, the or each piston defines the drive means.

Conveniently, the drive means is configured to drive the hood of the vehicle from the activated position back to the initial position, following activation of the safety arrangement.

Advantageously, the plane of the hood when the hood is positioned in the activated position is 30° and 90° relative to the horizontal plane of the vehicle in which the hood is mounted.

Conveniently, the safety arrangement is mounted in a vehicle and the hood wrap around distance from the ground in front of the vehicle around the front of the vehicle to the rear edge of the hood of the vehicle increases by between 1 and 40% or 5 and 40% when the hood is moved from the initial position to the activated position.

According to another aspect of the present invention, there is provided a vehicle incorporating the safety arrangement as defined in the claims hereinafter.

In order that the invention may be more readily understood, and so that further features thereof may be appreciated, embodiments of the invention will now be described, by way of example, with reference to the accompanying drawings in which:
FIGURE 1 is a diagrammatic view of a medium size vehicle incorporating a conventional safety arrangement,
FIGURE 2 is a diagrammatic view of a small vehicle which incorporates a conventional safety arrangement,
FIGURE 3 is a diagrammatic sectional view of part of a vehicle which incorporates a safety arrangement in accordance with a preferred embodiment of the invention, with the safety arrangement shown in an initial condition,
FIGURE 4 is a view corresponding to figure 3, with the safety arrangement shown in an activated condition,
FIGURE 5 is a front view of a vehicle incorporating a safety arrangement in accordance with the preferred embodiment of the invention, with the safety arrangement in an initial condition,
FIGURE 6 is a view corresponding to figure 5, with the safety arrangement in an activated condition,
FIGURE 7 is a diagrammatic view of a small vehicle incorporating a safety arrangement in accordance with the preferred embodiment of the invention, with the safety arrangement shown in an activated condition,
FIGURE 8 is a diagrammatic view of parts of a small vehicle which illustrates the effect of an embodiment of the present invention,
FIGURE 9 is a diagrammatic view of parts of a medium size vehicle which illustrates the effect of a conventional safety arrangement,
FIGURE 10 is a diagrammatic sectional view of a shield element in accordance with an embodiment of the invention, with the shield element shown in a retracted position, and
FIGURE 11 is a view corresponding to figure 8, with the shield element shown in an extended position.

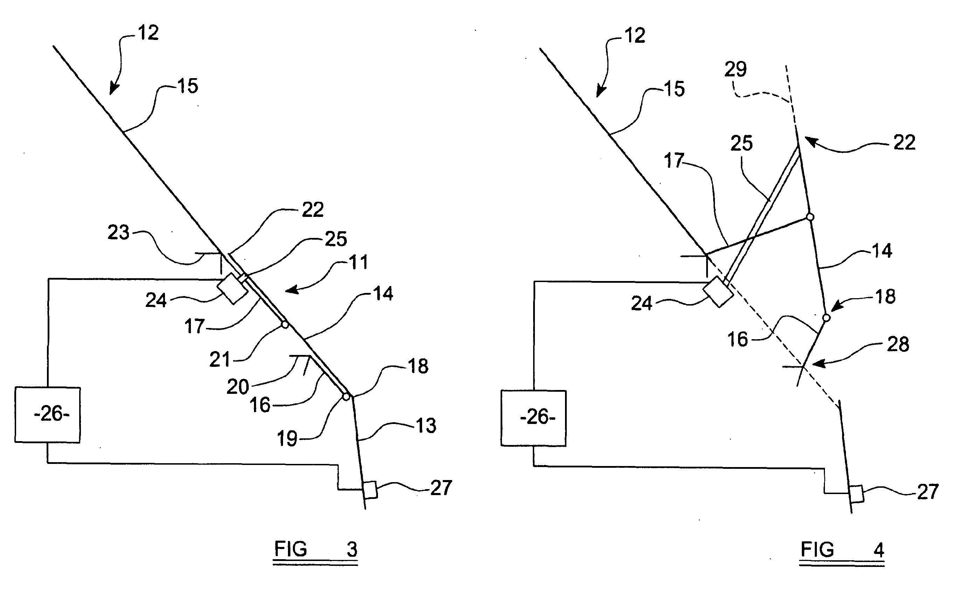

Referring now to figure 3 of the accompanying drawings, a safety arrangement 11 in accordance with a preferred embodiment of the invention is mounted in a vehicle 12. The vehicle 12 has a front grille 13, a hood 14 and a windscreen 15. The vehicle 12 is a vehicle which has a shorter than average hood, such as a small car of the type shown in figure 2 or a light truck. The angle of the hood 14 and the angle of the windscreen 15 relative to the horizontal plane of the vehicle 12 are substantially the same when the hood 14 is in the initial position. The plane of the hood 14 and the plane of the windscreen 15 are substantially aligned with one another. There is thus very little difference between the angle of the windscreen 15 and the angle of the hood 14 when the hood 14 is in the initial position, as shown in figure 3.

The safety arrangement 11 incorporates two first movement members 16 and two second movement members 17 (only one of each of the first and second movement members 16,17 is visible in figure 3). The first and second movement members 16, 17 are each defined by a rigid elongate link arm which is preferably of metal. The first and second movement members 16,17 are preferably designed as energy absorbing members which are, for instance, configured to deform plastically to absorb energy when a pedestrian lands on the hood 14.

One of the first movement members 16 is mounted to each side of the hood 14, adjacent or near the front edge 18 of the hood 14. One end of each of the first movement members 16 is pivotally mounted to the hood 14 at a pivot point 19. The other end of each of the first movement members 16 is pivotally mounted to the vehicle 12 at a pivot mount 20 which is provided on the vehicle 12 close to but spaced back from the grille 13.

One of the second movement members 17 is mounted to each side of the hood 14. One end of each of the second movement members 17 is pivotally mounted to the hood 14 at a pivot point 21. The pivot points 21 are positioned on the underside of the hood 14 at a position which is preferably halfway between the front edge 18 of the hood 14 and a rear edge 22 of the hood 14 which is closest to the windscreen 15. The position of the second movement members 17 halfway between the front and rear edges 18,22 of the hood 14 advantageously results in a reduced rigidity of the rear part of the hood 14 which is most likely to be hit by the head of a pedestrian. The second movement members 17 are shorter in embodiments where the second movement members 17 are positioned half way between the front and rear edges 18,22, as compared with an embodiment where the second movement members 17 are positioned adjacent the rear edge 22. This shorter length results advantageously in the second movement members 17 being of reduced cost and weight.

In other embodiments, the first and second movement members 16,17 may be slidably mounted to the hood 14 or the vehicle 12 so that the movement members 16,17 can undergo a translatory movement relative to the hood 14 or the vehicle 12 when the safety arrangement 11 is activated.

In further embodiments, however, the second movement member 17 may be pivotally mounted to the hood 14 at a different location between the front edge 18 and the rear edge 22. The other end of each of the second movement members 17 is pivotally mounted to the vehicle 12 at a pivot mount 23 which is provided on the vehicle 12 adjacent the lower edge of the windscreen 15.

It is to be appreciated that in other embodiments of the invention, there may be a larger or smaller number of movement members than the two pairs of first and second movement members 16,17 described above.

The safety arrangement 11 further comprises a drive means which, in this preferred embodiment, is in the form of a hood lifter 24. The lifter 24 is mounted to the vehicle 12 below and in front of the lower edge of the windscreen 15. The lifter 24 incorporates a drive element 25 which is pivotally mounted at one end to the underside of a rear part of the hood 14, adjacent the rear edge 22 of the hood 14. The lifter 24 is connected electrically to a control unit 26. A crash sensor 27 which is mounted at the front of the vehicle 12 is also connected electrically to the control unit 26. The crash sensor 27 is configured to sense when the vehicle 12 is expected to crash into a pedestrian or when the vehicle 12 actually crashes into a pedestrian.

In one embodiment, the drive means is connected to at least one of the first and second movement members to drive the said at least one movement member to move the hood 14 upon activation of the safety arrangement 11.

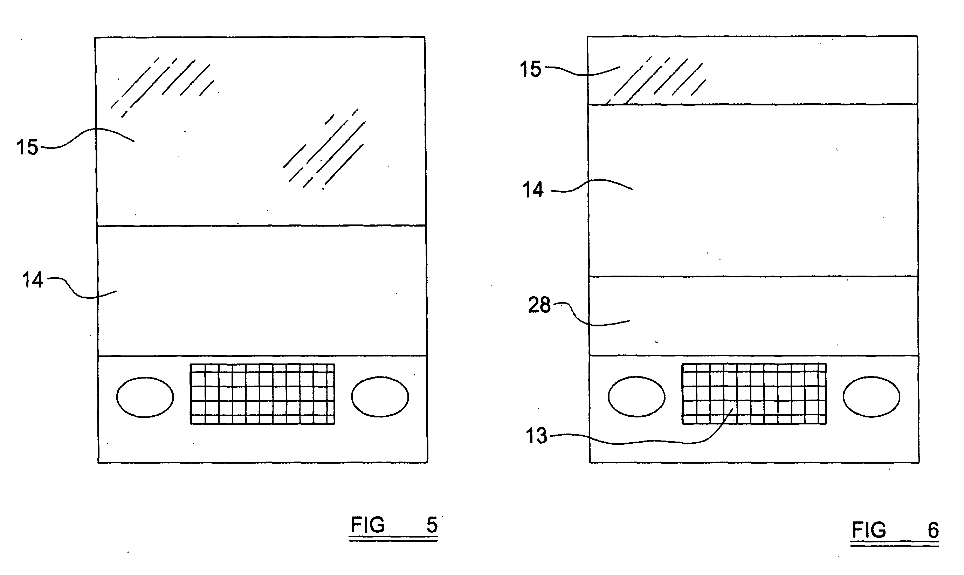

When the safety arrangement 11 is in an unactuated condition, the hood 14 remains in the initial position, as shown in figures 3 and 5, so that the vehicle 12 can be driven normally. The safety arrangement 11 does not interfere with mechanisms provided to allow the hood 14 to be opened manually, for instance to allow a person to maintain an engine beneath the hood 14. It is, however, to be appreciated that the safety arrangement 11 may also be installed in a vehicle which is not configured to allow the hood to be opened manually.

In use, the crash sensor 27 transmits a crash signal to the control unit 26 when the crash sensor 27 senses an impact, or an expected impact, with a pedestrian. The control unit 26 transmits an activation signal to the lifter 24 to activate the lifter 24 in response to receipt of the crash signal.

When the lifter 24 receives the activation signal, the lifter 24 is activated so that the drive element 25 drives the hood 14 upwards relative to the vehicle 12. The first and second movement members 16,17 control the movement of the hood 14 relative to the vehicle 12 so that the entire hood moves upwards and rearwards relative to the driving direction of the vehicle 12 to an activated position, as shown in figures 4 and 6. When the hood 14 is in the activated position, the hood 14 is held away from the rest of the vehicle 12 by the first and second movement members 16,17 so that the hood 14 can be deformed over a distance by a pedestrian landing on the hood 14. When the hood 14 is in the activated position, the hood 14 also acts as a shield between at least part of the windscreen 15 and a pedestrian who is thrown onto the front of the vehicle 12. The hood 14 can thus shield the pedestrian from hitting the windscreen 15.

In embodiments of the invention, the hood 14 is typically offset rearwardly from the front of the vehicle 12 when the hood 14 moves from the initial position to the activated position The hood wrap around distance of the vehicle 12 is greater when the hood 14 is offset rearwardly in the activated position than when the hood 14 is in the initial position.

It is to be noted that when the hood 14 is in the activated position, as shown in figure 6, a gap 28 is formed between the front edge 18 of the hood 14 and the top of the front of the vehicle 12 adjacent the grille 13.

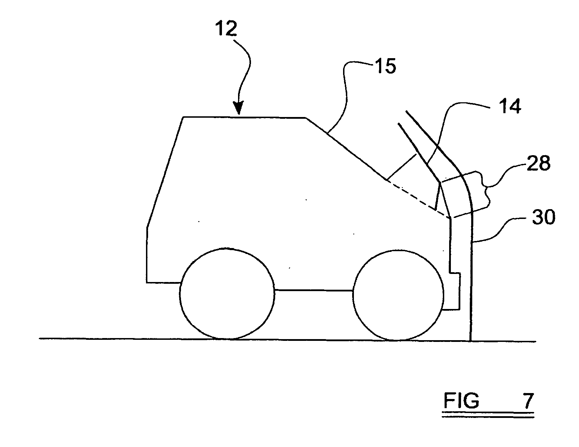

Referring now to figure 7, the hood wrap around distance of the vehicle 12 when the hood 14 is in the activated position is indicated by the solid line 30. It clear that the hood wrap around distance 30 of the vehicle shown in figure 7 which incorporates the safety arrangement 11 of an embodiment of the invention is greater than the hood wrap around distance 8 of the vehicle 1 shown in figure 2 which has the conventional safety arrangement.

The safety arrangement 11 in accordance with an embodiment of the invention is able to increase the hood wrap around distance of a vehicle having a shorter than average hood by a significant amount because the safety arrangement 11 moves the entire hood 14 upwardly relative to the vehicle 12. The safety arrangement 11 increases the hood wrap around distance by between 1 % and 40% or between 5% and 40% when the safety arrangement 11 moves the hood 14 from the initial position to the activated position.

In one embodiment, a cover element 29 is moveably mounted to the hood 14 adjacent the rear edge 22 of the hood 14. The cover element 29 can take the form of a net, or a Plexiglass structure, which is configured to be moved by a piston arrangement. The piston arrangement preferably comprises a spring biased element (not shown) that is mechanically released, for example by a Bowden cable arrangement, when the hood 14 moves to the activated position.

When the hood 14 is in the initial position, the cover element 29 is superimposed on the underside of the hood 14. When the hood 14 moves from the initial position to the activated position, the cover element 29 is moved to extend outwardly in the plane of the hood 14 from the rear edge of the hood 14, as shown in figure 4. The cover element 29 effectively increases the length of the hood 14 to increase the hood wrap around distance of the vehicle 12 and to shield more of the windscreen 15 from the pedestrian. The cover element 29 also increases the distance over which a pedestrian would travel before hitting the windscreen 15. It is advantageous if the cover element 29 is transparent so that a person driving the vehicle can see through the windscreen 15 to make it easier for the person to drive the vehicle 12 when the hood 14 is in the activated position.

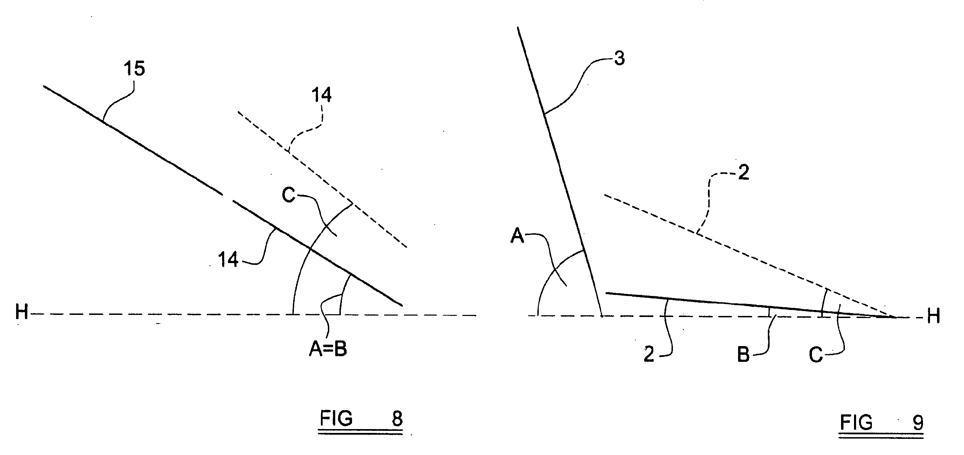

Referring now to figure 8, the angle of the windscreen 15 relative to the horizontal plane of the vehicle 12 is indicated by angle A. The angle of the hood 14 relative to the horizontal plane H of the vehicle 12 when the hood 14 is in the initial position is indicated by angle B, which is substantially the same as angle A.

The angle of the hood 14 relative to the horizontal plane H of the vehicle 12 when the hood 14 is in the activated position (shown in dotted line in figure 8) is indicated by angle C.

The angle of the hood 14 relative to the horizontal plane H of the vehicle 12 is greater than the angle of the windscreen 15 relative to the horizontal plane H of the vehicle 12 when the hood 14 is in the activated position. The increase in the angle of the hood 14 relative to the horizontal plane H of the vehicle 12 results in the hood 14 moving further away from the windscreen 15.

The effect of embodiments of the invention can be illustrated by comparing the embodiment of the invention shown in figure 8 with the hood 2 and windscreen 3 of the conventional safety arrangement shown in figure 9.

When the hood 2 of the conventional arrangement is in the initial position, the angle of the windscreen 3 relative to the horizontal plane H of the vehicle 12 is indicated by angle A and angle of the hood 2 relative to the horizontal plane H of the vehicle 12 is indicated by angle B.

The angle of the hood 2 relative to the horizontal plane H of the vehicle 12 is significantly less than the windscreen angle A when the hood 2 is in the initial position.

Following activation of the conventional safety arrangement, the hood 2 moves to the activated position, as shown by the dotted line in figure 9. The angle of the hood 2 relative to the horizontal plane H is indicated by angle C.

The hood angle C when the hood 2 is in the activated position is closer to the windscreen angle A than when the hood 2 is in the initial position. However, when the hood 2 is in the activated position, the hood angle C is still less than the windscreen angle A. This is in contrast to embodiments of the invention, where the hood angle C is greater than the windscreen angle A.

It can be seen from figure 9 that the difference in the angle between the hood 2 and the windscreen 3 decreases as the hood 2 is moved from the initial position to the activated position. In other words, when the hood 2 is in the activated position, the angle of the hood 2 is more similar to the angle of the windscreen 3 than when the hood 2 is in the initial position. This is the opposite to the change in the difference of the angle between the hood 14 and the windscreen 15 which occurs in embodiments of the invention. In embodiments of the invention, the difference in the angle between the hood 14 and the windscreen 15 increases when the hood 14 moves from the initial position to the activated position.

The increase in the hood angle beyond the windscreen angle in embodiments of the invention allows a shorter than average hood to move to a suitable position to shield a pedestrian from hitting part of the windscreen 15. Conventional safety arrangements which do not increase the hood wrap around distance significantly are not able to move a shorter than average hood to a position in which the hood adequately shields a pedestrian from the windscreen.

In one embodiment, the safety arrangement 11 is configured to move the hood 14 to an activated position in which the plane of the hood is substantially perpendicular to the horizontal plane of the vehicle in which the hood is mounted. In this embodiment, the plane of the hood 14 when the hood 14 is in the activated position is between 30° and 90° relative to the horizontal plane of the vehicle.

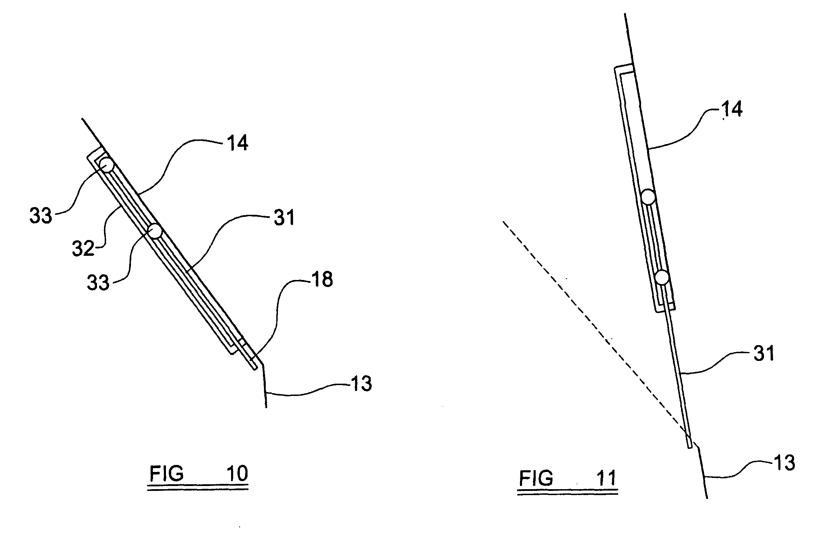

In a yet further embodiment of the invention, a shield element 31 is slidably mounted beneath the hood 14 adjacent the front edge 18 of the hood 14, as shown in figure 10. The shield element 31 extends across the width of the hood 14. The shield element 31 may be rigid and, for instance, formed of a plastics material.

In other embodiments, the shield element 31 may be flexible, for instance formed from a net. In these embodiments, the safety arrangement 11 may be configured to stretch the shield element 31 between the two side edges of the hood 14 when the hood 14 moves to the activated position.

The shield element 31 is slidably mounted to the hood 14 by at least one guide member 32. The guide member 32 defines an elongate slot which slidably retains a plurality of slide elements 33 provided on the shield element 31.

When the safety arrangement 11 is activated to move the hood 14 to the activated position, the shield element 31 slides outwardly from the front edge 18 of the hood 14 to an extended position, as shown in figure 11. When the shield element 31 is in the extended position, the shield element 31 extends across the gap 28 between the front edge 18 of the hood 14 and the top of the front of the vehicle 12. The shield element 31 thus provides a barrier to stop a pedestrian from moving through the gap 28.

In one embodiment, the shield element 31 is connected to at least one of the first movement members 16 so that the at least one first movement member 16 supports the shield element 31 when the shield element 31 is in the extended position. In another embodiment, the shield element 31 is a rigid element and the shield element 31 replaces the first movement members 16.

In one embodiment, the lower edge of the shield element 31 is configured to engage the front part of the vehicle 12 pivotally above the grille 13.

In a further embodiment of the invention, the drive means 24 is reversible and is configured to move the hood 14 from the activated position back to the initial position, following activation of the safety arrangement 11. In this embodiment, a timer can be provided within the control unit 26 to control the drive means 24 to return the hood 14 to the initial position after a predetermined length of time has elapsed following activation of the safety arrangement. The predetermined length of time can be, for instance, 0.5 to 2 seconds. The safety arrangement 11 can thus be reset following activation to allow the driver of the vehicle 12 to continue driving the vehicle 12 safely.

It should be understood that the drive means 24 in embodiments of the invention may be either fully reversible (e.g. moved electrically, hydraulically, pneumatically, etc.), or semi-reversible (e.g. moved pyrotechnically to the activated position and then spring biased to return to the initial position), or automatically resettable (e.g. by being moved pyrotechnically in both directions).

In one embodiment, the drive means 24 is a piston which is mounted at one end to the vehicle 12 and mounted at the other end to one of the second movement members 17. The piston is configured to drive the second movement member 17 when the safety arrangement 11 is activated so that the second movement member 17 moves the hood 14 to the activated position. An advantage of this embodiment is that the piston can be shorter than a piston which is mounted directly to the hood 14, such as the lifter 24 shown in figure 4.

In a further embodiment of the invention, the first and second movement members 16,17 each comprise a piston which is preferably telescopic. In this further embodiment, the pistons define the drive means which are configured to lift the hood 14 to the activated position. The vertical and rearward displacement of the hood 14 relative to the vehicle 12 can be increased if pistons are used as the movement members, compared with the embodiment described above in which the movement members are link arms.

In a yet further embodiment, the movement members 16,17 may be formed from a combination of pairs of pistons with pairs of link arms. The link arms may be rigid, such as the link arms described above, or flexible, for instance in the form of cables.

When used in this specification and claims, the terms "comprises" and "comprising" and variations thereof mean that the specified features, steps or integers are included. The terms are not to be interpreted to exclude the presence of other features, steps or components.

## Claims

1. A safety arrangement configured to be mounted in a vehicle having a hood (14) with a front edge (18) and a rear edge (22), the rear edge (22) being positioned near a windscreen (15), the safety arrangement comprising:
at least one first movement member (16) and at least one second movement member (17), the at least one first movement member (16) being configured to be mounted to the hood (14) adjacent or near the front edge (18) of the hood (14) and the at least one second movement member (17) being configured to be mounted to the hood (14) at a position between the front (18) and rear edges (22) of the hood (14), and
a drive means (24) configured to be mounted to the vehicle to drive the hood (14) of the vehicle (12) from an initial position to an activated position in response to an activation signal,
wherein, when the safety arrangement is mounted in position in a vehicle (12), the movement members (16,17) control the movement of the hood (14) when the hood is driven by the drive means (24) so that the angle of the hood (14) relative to the horizontal plane (H) of the vehicle (12) is greater than the angle of the windscreen (15) relative to the horizontal plane (H) of the vehicle (12) when the hood (14) is in the activated position, **characterised in that**:
the movement members (16,17) control the movement of the hood (14) when the hood (14) is driven by the drive means (24) so that the entire hood (14) moves upwards relative to the vehicle (12) and rearwardly from the front of the vehicle (12).

2. A safety arrangement according to claim 1, wherein the angle of the hood (14) and the angle of the windscreen (15) relative to the horizontal plane (H) of the vehicle (12) are substantially the same when the hood (14) is in the initial position.

3. A safety arrangement according to claim 1 or claim 2, wherein the at least one second movement member (17) is mounted to the hood (14) at a position which is substantially halfway between the front (18) and rear edges (22) of the hood (14).

4. A safety arrangement according to any one of the preceding claims, wherein the hood (14) incorporates a cover element (29) which is moveably mounted to the hood (14) adjacent the rear edge (18) of the hood (14), the cover element (29) being superimposed on the underside of the hood (14) when the hood (14) is in the initial position, but configured to move to a position in which the cover element (29) extends outwardly from the rear edge (22) of the hood (14) when the hood (14) moves from initial position to the activated position.

5. A safety arrangement according to any one of the preceding claims, wherein the hood (14) incorporates a shield element (31) which is moveably mounted to the hood (14) adjacent the front edge (18) of the hood (14), the shield element (31) being superimposed on the underside of the hood (14) when the hood (14) is in the initial position, but configured to move to a position where the shield element (31) extends outwardly from the front edge (18) of the hood (14) when the hood (14) moves from the initial position to the activated position.

6. A safety arrangement according to claim 5, wherein the at least one first movement member (16) is the shield element (31).

7. A safety arrangement according to claim 5 or claim 6, wherein the hood (14) incorporates a guide member (32) which contacts the shield element (31) to guide the shield element (31) when the shield element (31) moves relative to the hood (14).

8. A safety arrangement according to any one of claims 5 to 7, wherein the shield element (31) is configured to pivotally engage with a part of the vehicle (12) in which the hood (14) is mounted.

9. A safety arrangement according to any one of the preceding claims, wherein the drive means (24) is connected to at least one of the first and second movement members (16,17) to drive the said at least one movement member (16,17).

10. A safety arrangement according to any one of the preceding claims, wherein one of the at least one first movement members (16) and one of the at least one second movement members (17) is a plastically deformable elongate element and the other of the at least one first movement members (16) and the at least one second movement members (17) is a flexible element.

11. A safety arrangement according to any one claims 1 to 9, wherein at least one of the movement members (16,17) comprises a piston.

12. A safety arrangement according to claim 11, wherein the or each piston defines the drive means.

13. A safety arrangement according to any one of the preceding claims, wherein the drive means (24) is configured to drive the hood (14) of the vehicle (12) from the activated position back to the initial position, following activation of the safety arrangement.

14. A safety arrangement according to any one of the preceding claims, wherein the safety arrangement is mounted in a vehicle and the hood wrap around distance (30) from the ground in front of the vehicle (12) around the front of the vehicle (12) to the rear edge (22) of the hood (14) of the vehicle (12) increases by between 1 and 40% when the hood (14) is moved from the initial position to the activated position.

15. A vehicle (12) incorporating the safety arrangement according to any one of the preceding claims.

## Patentansprüche

1. Sicherheitsanordnung, die so eingerichtet ist, dass sie in einem Fahrzeug montiert wird, das eine Motorhaube (14) mit einer Vorderkante (18) und einer Hinterkante (22) aufweist, wobei die Hinterkante (22) nahe einer Windschutzscheibe (15) platziert ist, wobei die Sicherheitsanordnung Folgendes umfasst:
mindestens ein erstes Bewegungselement (16) und mindestens ein zweites Bewegungselement (17), wobei das mindestens eine erste Bewegungselement (16) so eingerichtet ist, dass es an der Motorhaube (14) angrenzend an oder nahe der Vorderkante (18) der Motorhaube (14) montiert wird, und das mindestens eine zweite Bewegungselement (17) so eingerichtet ist, dass es an der Motorhaube (14) an einer Stelle zwischen der Vorder- (18) und Hinterkante (22) der Motorhaube (14) montiert wird, und
ein Antriebsmittel (24), das so eingerichtet ist, dass es an dem Fahrzeug montiert wird, um die Motorhaube (14) des Fahrzeugs (12) als Reaktion auf ein Aktivierungssignal aus einer Ausgangsstellung in eine aktivierte Stellung zu bewegen,
wobei, wenn die Sicherheitsanordnung in ihrer Position in einem Fahrzeug (12) montiert ist, die Bewegungsmittel (16, 17) die Bewegung der Motorhaube (14) steuern, wenn die Motorhaube von dem Antriebsmittel (24) bewegt wird, sodass der Winkel der Motorhaube (14) bezogen auf die waagerechte Ebene (H) des Fahrzeugs (12) größer ist als der Winkel der Windschutzscheibe (15) bezogen auf die waagerechte Ebene (H) des Fahrzeugs (12), wenn sich die Motorhaube (14) in der aktivierten Stellung befindet, **dadurch gekennzeichnet, dass**:
die Bewegungsmittel (16, 17) die Bewegung der Motorhaube (14) steuern, wenn die Motorhaube (14) von dem Antriebsmittel (24) bewegt wird, sodass sich die gesamte Motorhaube (14) bezogen auf das Fahrzeug (12) nach oben und von der Vorderseite des Fahrzeugs (12) aus nach hinten bewegt.

2. Sicherheitsanordnung nach Anspruch 1, wobei der Winkel der Motorhaube (14) und der Winkel der Windschutzscheibe (15) bezogen auf die waagerechte Ebene (H) des Fahrzeugs (12) im Wesentlichen gleich sind, wenn sich die Motorhaube (14) in der Ausgangsstellung befindet.

3. Sicherheitsvorrichtung nach Anspruch 1 oder Anspruch 2, wobei das mindestens eine zweite Bewegungselement (17) an der Motorhaube (14) an einer Stelle montiert ist, die im Wesentlichen auf halbem Wege zwischen der Vorder-(18) und Hinterkante (22) der Motorhaube (14) liegt.

4. Sicherheitsanordnung nach einem der vorhergehenden Ansprüche, wobei die Motorhaube (14) ein Abdeckelement (29) aufweist, das beweglich an der Motorhaube (14) angrenzend an der Hinterkante (18) der Motorhaube (14) montiert ist, wobei das Abdeckelement (29) auf der Unterseite der Motorhaube (14) liegt, wenn sich die Motorhaube (14) in der Ausgangsstellung befindet, jedoch so eingerichtet ist, dass es sich in eine Stellung bewegt, in der sich das Abdeckelement (29) von der Hinterkante (22) der Motorhaube (14) nach außen erstreckt, wenn sich die Motorhaube (14) aus der Ausgangsstellung in die aktivierte Stellung bewegt.

5. Sicherheitsanordnung nach einem der vorhergehenden Ansprüche, wobei die Motorhaube (14) ein Schutzelement (31) aufweist, das beweglich an der Motorhaube (14) angrenzend an der Vorderkante (18) der Motorhaube (14) montiert ist, wobei das Schutzelement (31) auf der Unterseite der Motorhaube (14) liegt, wenn sich die Motorhaube (14) in der Ausgangsstellung befindet, jedoch so eingerichtet ist, dass es sich in eine Stellung bewegt, in der sich das Schutzelement (31) von der Vorderkante (18) der Motorhaube (14) nach außen erstreckt, wenn sich die Motorhaube (14) aus der Ausgangsstellung in die aktivierte Stellung bewegt.

6. Sicherheitsvorrichtung nach Anspruch 5, wobei es sich bei dem mindestens einen ersten Bewegungselement (16) um das Schutzelement (31) handelt.

7. Sicherheitsvorrichtung nach Anspruch 5 oder Anspruch 6, wobei die Motorhaube (14) ein Führungselement (32) aufweist, das das Schutzelement (31) berührt, um das Schutzelement (31) zu führen, wenn sich das Schutzelement (31) bezogen auf die Motorhaube (14) bewegt.

8. Sicherheitsanordnung nach einem der Ansprüche 5 bis 7, wobei das Schutzelement (31) so eingerichtet ist, dass es drehgelenkig mit einem Teil des Fahrzeugs (12) in Eingriff steht, in dem die Motorhaube (14) montiert ist.

9. Sicherheitsanordnung nach einem der vorhergehenden Ansprüche, wobei das Antriebsmittel (24) mit dem ersten und/oder zweiten Bewegungselement (16, 17) verbunden ist, um das mindestens eine Bewegungselement (16, 17) zu bewegen.

10. Sicherheitsanordnung nach einem der vorhergehenden Ansprüche, wobei eins von dem mindestens einen ersten Bewegungselement (16) und eins von dem mindestens einen zweiten Bewegungselement (17) ein plastisch verformbares längliches Element ist und von dem mindestens einen ersten Bewegungselement (16) und dem mindestens einen zweiten Bewegungselement (17) das andere ein flexibles Element ist.

11. Sicherheitsanordnung nach einem der Ansprüche 1 bis 9, wobei mindestens eins der Bewegungselemente (16, 17) einen Kolben umfasst.

12. Sicherheitsvorrichtung nach Anspruch 11, wobei der oder jeder Kolben das Antriebsmittel definiert.

13. Sicherheitsanordnung nach einem der vorhergehenden Ansprüche, wobei das Antriebsmittel (24) so eingerichtet ist, dass es die Motorhaube (14) des Fahrzeugs (12) nach der Aktivierung der Sicherheitsanordnung aus der aktivierten Stellung zurück in die Ausgangsstellung bewegt.

14. Sicherheitsanordnung nach einem der vorhergehenden Ansprüche, wobei die Sicherheitsanordnung in einem Fahrzeug montiert ist und sich die Abwickellänge (30) auf der Motorhaube vom Boden vor dem Fahrzeug (12) um das Vorderteil des Fahrzeugs (12) herum zur Hinterkante (22) der Motorhaube (14) des Fahrzeugs (12) um zwischen 1 und 40 % verlängert, wenn die Motorhaube (14) aus der Ausgangsstellung in die aktivierte Stellung bewegt wird.

15. Fahrzeug (12), das die Sicherheitsanordnung nach einem der vorhergehenden Ansprüche aufweist.

## Revendications

1. Agencement de sécurité configuré pour être monté dans un véhicule présentant un capot (14) avec un bord avant (18) et un bord arrière (22), le bord arrière (22) étant positionné près d'un pare-brise (15), l'agencement de sécurité comprenant :
au moins un premier élément de mouvement (16) et au moins un second élément de mouvement (17), l'au moins un premier élément de mouvement (16) étant configuré pour être monté sur le capot (14) adjacent au ou près du bord avant (18) du capot (14) et l'au moins un second élément de mouvement (17) étant configuré pour être monté sur le capot (14) à une position entre les bords avant (18) et arrière (22) du capot (14), et
un moyen d'entraînement (24) configuré pour être monté sur le véhicule pour entraîner le capot (14) du véhicule (12) d'une position initiale à une position activée en réaction à un signal d'activation,
dans lequel, quand l'agencement de sécurité est monté en place dans un véhicule (12), les éléments de mouvement (16, 17) commandent le mouvement du capot (14) quand le capot est entraîné par le moyen d'entraînement (24) de sorte que l'angle du capot (14) par rapport au plan horizontal (H) du véhicule (12) est supérieur à l'angle du pare-brise (15) par rapport au plan horizontal (H) du véhicule (12) quand le capot (14) est dans la position activée, **caractérisé en ce que** :
les éléments de mouvement (16, 17) commandent le mouvement du capot (14) quand le capot (14) est entraîné par le moyen d'entraînement (24) de sorte que le capot (14) entier se déplace vers le haut par rapport au véhicule (12) et vers l'arrière à partir de l'avant du véhicule (12).

2. Agencement de sécurité selon la revendication 1, dans lequel l'angle du capot (14) et l'angle du pare-brise (15) par rapport au plan horizontal (H) du véhicule (12) sont essentiellement identiques quand le capot (14) est dans la position initiale.

3. Agencement de sécurité selon la revendication 1 ou la revendication 2, dans lequel l'au moins un second élément de mouvement (17) est monté sur le capot (14) à une position qui est essentiellement à mi-chemin entre les bords avant (18) et arrière (22) du capot (14).

4. Agencement de sécurité selon l'une quelconque des revendications précédentes, dans lequel le capot (14) comporte un élément de recouvrement (29) qui est monté mobile sur le capot (14), adjacent au bord arrière (18) du capot (14), l'élément de recouvrement (29) étant superposé sur la face inférieure du capot (14) quand le capot (14) est dans la position initiale, mais configuré pour se déplacer dans une position dans laquelle l'élément de recouvrement (29) s'étend vers l'extérieur à partir du bord arrière (22) du capot (14) quand le capot (14) se déplace de la position initiale à la position activée.

5. Agencement de sécurité selon l'une quelconque des revendications précédentes, dans lequel le capot (14) comporte un élément de protection (31) qui est monté mobile sur le capot (14), adjacent au bord avant (18) du capot (14), l'élément de protection (31) étant superposé sur la face inférieure du capot (14) quand le capot (14) est dans la position initiale, mais configuré pour se déplacer dans une position dans laquelle l'élément de protection (31) s'étend vers l'extérieur à partir du bord avant (18) du capot (14) quand le capot (14) se déplace de la position initiale à la position activée.

6. Agencement de sécurité selon la revendication 5, dans lequel l'au moins un premier élément de mouvement (16) est l'élément de protection (31).

7. Agencement de sécurité selon la revendication 5 ou la revendication 6, dans lequel le capot (14) comporte un élément de guide (32) qui touche l'élément de protection (31) pour guider l'élément de protection (31) quand l'élément de protection (31) se déplace par rapport au capot (14).

8. Agencement de sécurité selon l'une quelconque des revendications 5 à 7, dans lequel l'élément de protection (31) est configuré pour venir en prise de manière pivotante avec une partie du véhicule (12) dans laquelle le capot (14) est monté.

9. Agencement de sécurité selon l'une quelconque des revendications précédentes, dans lequel le moyen d'entraînement (24) est relié à au moins l'un des premier et second éléments de mouvement (16, 17) pour entraîner ledit au moins un élément de mouvement (16, 17).

10. Agencement de sécurité selon l'une quelconque des revendications précédentes, dans lequel l'un du au moins un premier élément de mouvement (16) et l'un du au moins un second élément de mouvement (17) est un élément allongé plastiquement déformable et l'autre du au moins un premier élément de mouvement (16) et du au moins un second élément de mouvement (17) est un élément flexible.

11. Agencement de sécurité selon l'une quelconque des revendications 1 à 9, dans lequel au moins l'un des éléments de mouvement (16, 17) comprend un piston.

12. Agencement de sécurité selon la revendication 11, dans lequel le ou chaque piston définit le moyen d'entraînement.

13. Agencement de sécurité selon l'une quelconque des revendications précédentes, dans lequel le moyen d'entraînement (24) est configuré pour entraîner le capot (14) du véhicule (12) pour le ramener de la position activée à la position initiale, après l'activation de l'agencement de sécurité.

14. Agencement de sécurité selon l'une quelconque des revendications précédentes, dans lequel l'agencement de sécurité est monté dans un véhicule et la longueur d'enveloppement (30) du capot du sol devant le véhicule (12) autour de l'avant du véhicule (12) au bord arrière (22) du capot (14) du véhicule (12) augmente d'entre 1 et 40 % quand le capot (14) est déplacé de la position initiale à la position activée.

15. Véhicule (12) comportant l'agencement de sécurité selon l'une quelconque des revendications précédentes.
